# EUROPÄISCHE PATENTSCHRIFT

(11) **EP 3 095 650 B1**
(45) Veröffentlichungstag und Bekanntmachung des Hinweises auf die Patenterteilung: **06.03.2019**
(21) Anmeldenummer: 16001123.5
(22) Anmeldetag: 17.05.2016
(51) Int. Cl.: B60S 1/34

(54) **SCHEIBENWISCHER MIT OPTIMIERTEM WISCHFELD FÜR GEWÖLBTE WINDSCHUTZSCHEIBEN**
WINDSCREEN WIPER WITH OPTIMIZED WIPING FIELD FOR CURVED WINDSHIELDS
ESSUIE-GLACE COMPRENANT UN CHAMP BALAYE OPTIMISE POUR DES PARE-BRISES INCURVES

(30) Priorität: 19.05.2015 DE 102015006415
(43) Veröffentlichungstag der Anmeldung: 23.11.2016
(73) Patentinhaber: MAN Truck & Bus AG, 80995 München (DE)
(72) Erfinder: Poliak, Slava, 81539 München (DE); Siflinger, Markus, 85604 Zorneding (DE); Kopp, Stephan, 83623 Ascholding (DE)
(74) Vertreter: v. Bezold & Partner Patentanwälte - PartG mbB

(56) Entgegenhaltungen:
- FR-A1- 2 646 643
- FR-A1- 2 907 733
- US-A- 5 186 064

## Beschreibung

Die Erfindung betrifft einen Scheibenwischer für eine zweckmäßig aerodynamisch gewölbte Windschutzscheibe für ein Fahrzeug, insbesondere ein Nutzfahrzeug, z. B. einen Lastkraftwagen oder einen Omnibus. Die gewölbte Windschutzscheibe weist einen Mittelbereich und zwei seitliche Außenbereiche mit zweckmäßig stärkerer Krümmung als im Mittelbereich auf.

FR 2 907 733 A1, FR 2 646 643 A1 und US 5 186 064 A offenbaren übliche Scheibenwischer für Fahrzeug-Windschutzscheiben mit Lagerstellen, um die die Scheibenwischer schwenkbar sind.

Aerodynamisch ausgelegte Nutzfahrzeug-Formen, insbesondere LKW-Formen (LKW: Lastkraftwagen), benötigen zwingend Windschutzscheiben, die üblicherweise im A-Säulenbereich eine stärkere Krümmung aufweisen als im Mittelbereich. Die im A-Säulenbereich stärker gekrümmten Windschutzscheiben lassen sich mit herkömmlichen Wischeranlagen qualitativ schlecht, nicht gesetzeskonform und/oder gar nicht wischen. Dies resultiert insbesondere auf dem Abheben des Wischerblattes der Scheibenwischer aufgrund der stärkeren Scheibenkrümmung in Relation zur Schwenkachse, um die die Scheibenwischer schwenkbar sind.

Die Figuren 1A, 1B und 1C zeigen eine Vorderansicht, eine linksseitige Ansicht und eine Draufsicht auf eine Windschutzscheibe WSS' und einen Scheibenwischer S' gemäß Stand der Technik in einer Parkposition. Die Windschutzscheibe WSS' umfasst einen Mittelbereich A' und zwei seitliche Außenbereiche B' mit stärkerer Krümmung als im Mittelbereich A'.

Die Figuren 2A, 2B und 2C zeigen eine Vorderansicht, eine linksseitige Ansicht und eine Draufsicht auf die Windschutzscheibe WSS' und den Scheibenwischer S' der Figuren 1A, 1B und 1C in einer äußersten Außenwischposition.

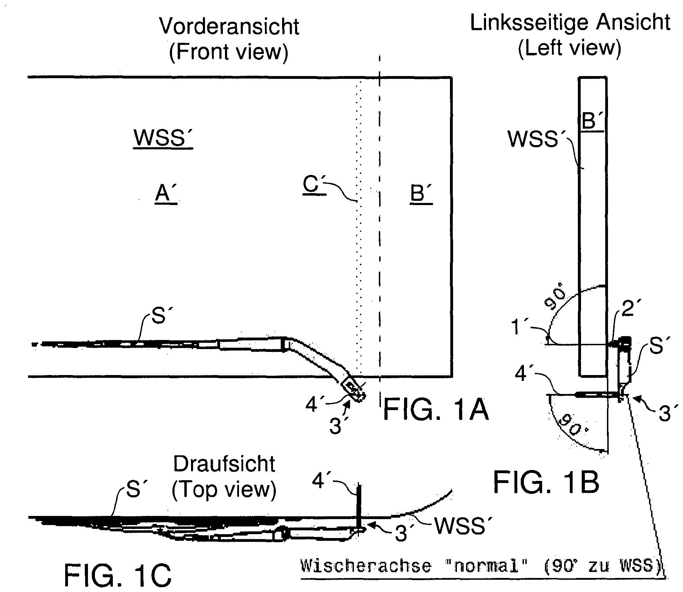

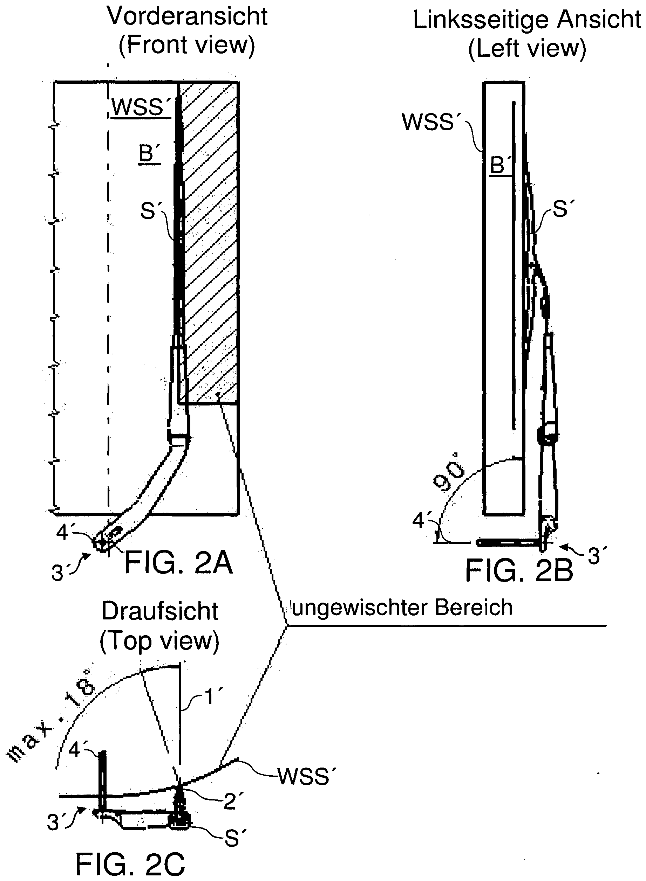

Unter Bezugnahme auf die Figuren 1A, 1B, 1C, 2A, 2B und 2C umfasst der Scheibenwischer S' ein in einer Wischebene 1' wirk-/ausrichtbares Wischelement 2' zum Wischen der Windschutzscheibe WSS' und eine Lagerstelle 3', die eine Schwenkachse 4' definiert, um die der Scheibenwischer S' von der Parkposition in die Außenwischposition schwenkbar ist.

Die Ausrichtung der Wischebene 1' bzw. des Wischelements 2' relativ zur Windschutzscheibe WSS' sollte im Idealfall 90° betragen und somit im Idealfall "normal" ausgeführt sein. Die Abweichung hiervon wird als Normalenfehlerwinkel bezeichnet, wobei der Normalenfehlerwinkel im Idealfall folglich 0° beträgt.

Die Schwenkachse 4' ist relativ zur Windschutzscheibe WSS' darüber, also im Windschutzscheibenbereich C', rechtwinklig bzw. normal ausgerichtet. Die Schwenkachse 4' und die Wischebene 1' sind in der Parkposition parallel zueinander ausgerichtet.

In der Außenwischposition sind die Schwenkachse 4' und die Wischebene 1' ebenfalls parallel zueinander ausgerichtet. Der Normalenfehlerwinkel der Wischebene 1' bzw. des Wischelements 2' in der Außenwischposition ist relativ groß, was zu einem verschlechterten Wischergebnis führt. Der in Figur 2C zu sehende Normalenfehlerwinkel beträgt ca. 18°, was in der Praxis dem üblicherweise maximal vertretbaren Normalenfehlerwinkel entspricht.

Eine Aufgabe der Erfindung ist es, das Wischergebnis einer gewölbten Windschutzscheibe im seitlichen Außenbereich zu verbessern und/oder das Wischfeld im Außenbereich einer gewölbten Windschutzscheibe nach seitlich außen (und somit insbesondere hin zu Fahrzeug-A-Säulen) zu vergrößern, insbesondere unter Beibehaltung eines qualitativ hochwertigen Wischergebnisses im Mittelbereich der Windschutzscheibe.

Diese Aufgabe kann mit den Merkmalen des Hauptanspruchs gelöst werden. Vorteilhafte Weiterbildungen der Erfindung können den Unteransprüchen und der folgenden Beschreibung bevorzugter Ausführungsformen der Erfindung entnommen werden.

Die Erfindung schafft einen Scheibenwischer für eine zweckmäßig aerodynamisch gewölbte Windschutzscheibe für ein Fahrzeug, z. B. ein Nutzfahrzeug, insbesondere einen Lastkraftwagen oder einen Omnibus. Die Windschutzscheibe umfasst einen Mittelbereich und zwei seitliche Außenbereiche mit insbesondere stärkerer Krümmung als im Mittelbereich. Die zwei seitlichen Außenbereiche dienen vorzugsweise zur Positionierung und/oder zum Anschluss an A-Säulen des Fahrzeugs.

Der Scheibenwischer umfasst ein in einer Wischebene wirkbares und/oder ausrichtbares Wischelement zum Wischen der Windschutzscheibe und eine Lagerstelle, die eine Schwenkachse aufweist, insbesondere definiert, um die der Scheibenwischer von einer Parkposition in eine zweckmäßig äußerste Außenwischposition schwenkbar ist. Die Außenwischposition umfasst vorzugsweise einen der Außenbereiche.
Der Scheibenwischer zeichnet sich insbesondere dadurch aus, dass die Schwenkachse und die Wischebene unter einem Neigungswinkel α geneigt zueinander ausgerichtet sind und sich somit vorzugsweise schneiden, insbesondere in der Parkposition und/oder der Außenwischposition. Dadurch kann vor allem ermöglicht werden, dass der Normalenfehlerwinkel der Wischebene bzw. des Wischelements relativ zur Windschutzscheibe in der Außenwischposition und/oder im Außenbereich der Windschutzscheibe reduzierbar ist. Alternativ oder ergänzend kann dadurch ermöglicht werden, dass das Wischfeld des Außenbereichs der Windschutzscheibe nach seitlich außen vergrößerbar ist.
Es ist möglich, dass die Wischebene in der Parkposition im Wesentlichen senkrecht bzw. normal zur Windschutzscheibe ausgerichtet ist, so dass vorzugsweise der Normalenfehlerwinkel im Wesentlichen 0° beträgt.
Die Schwenkachse ist vorzugsweise relativ zur Windschutzscheibe darüber nicht senkrecht und somit nicht normal ausgerichtet, sondern um den Neigungswinkel α beaufschlagt geneigt und somit um den Neigungswinkel α abweichend geneigt und/oder nicht-senkrecht.
Der Windschutzscheibenbereich über der Schwenkachse kann z. B. durch eine Ebene definiert werden, die sich im Wesentlichen vertikal erstreckt, die Schwenkachse umfasst und vorzugsweise im Wesentlichen parallel zur Fahrzeuglängsrichtung verläuft.
Das Wischelement und somit vorzugsweise die Wischebene sind in der Parkposition zweckmäßig im Wesentlichen horizontal ausgerichtet.

Die Schwenkachse und die Wischebene sind in der Parkposition unter dem Neigungswinkel α geneigt zueinander ausgerichtet.

Die Schwenkachse und die Wischebene sind in der Parkposition und der Außenwischposition unter dem Neigungswinkel (α) geneigt zueinander ausgerichtet und können sich somit unter dem Neigungswinkel (α) schneiden.

Das Wischelement und somit vorzugsweise die Wischebene sind in der Außenwischposition zweckmäßig im Wesentlichen vertikal ausgerichtet.
Die Wischebene und/oder das Wischelement kann in der Außenwischposition unter einem mittels dem Neigungswinkel α reduzierten Normalenfehlerwinkel relativ zur Windschutzscheibe ausgerichtet werden, insbesondere wirken. Ergänzend kommt die Wirkung des Neigungswinkels α auf die Ausrichtung der Wischebene und/oder des Wischelements relativ zur Windschutzscheibe und somit insbesondere auf den Normalenfehlerwinkel relativ zur Windschutzscheibe erst hin zur Außenwischposition, insbesondere erst in der Außenwischposition zum Tragen. Der Neigungswinkel α der Schwenkachse spiegelt sich folglich zweckmäßig erst in der Außenwischposition (bzw. im Außenbereich der Windschutzscheibe) in der Ausrichtung der Wischebene und/oder des Wischelements relativ zur Windschutzscheibe wider und/oder führt erst dort zu einer Normalenfehlerwinkelreduzierung.
Es ist möglich, aber nicht zwingend, dass der Normalenfehlerwinkel in der Außenwischposition bzw. dem Außenbereich der Windschutzscheibe bis auf 0° reduziert wird. Ebenfalls ist es möglich, aber nicht zwingend, dass sich der volle Neigungswinkel α in der Außenwischposition widerspiegelt.
Die Schwenkachse ist vorzugsweise in einer im Wesentlichen vertikalen, sich im Wesentlichen parallel zur Fahrzeuglängsrichtung erstreckenden Ebene ausgerichtet.
Der Neigungswinkel α liegt z. B. zwischen einschließlich 5° und einschließlich 25°, zwischen einschließlich 10° und einschließlich 20° und beträgt vorzugsweise 14° +/- 4°, zweckmäßig in der Parkposition und/oder der Außenwischposition.
Die Außenwischposition umfasst zweckmäßig den Außenbereich der Windschutzscheibe. Die Außenwischposition ist vorzugsweise die seitlich äußerste Außenwischposition.
Das Wischelement kann im Rahmen der Erfindung zumindest abschnittsweise linear und/oder zumindest abschnittsweise gekrümmt ausgeführt sein, zweckmäßig gemäß der Form der Windschutzscheibe.
Das Wischelement wird im Betriebszustand und/oder Montagezustand des Scheibenwischers üblicherweise gegen die Windschutzscheibe gedrückt werden. Dadurch kann das Wischelement verformt werden.

Das Merkmal der Wischebene ist im Rahmen der Erfindung zweckmäßig breit auszulegen und umfasst insbesondere die Ebene, in der das Wischelement ausgerichtet ist bzw. auf die Windschutzscheibe wirkt und/oder ohne Anpressdruck wirken würde bzw. ausgerichtet wäre.

Das Merkmal im Wesentlichen umfasst im Rahmen der Erfindung zweckmäßig Abweichungen von maximal +/- 2°, +/- 4° oder +/- 6°.

Zu erwähnen ist, dass das Wischelement ein z. B. übliches Wischblatt sein kann.

Zu erwähnen ist ferner, dass die Lagerstelle und/oder die Schwenkachse zur insbesondere ortsfesten Positionierung an das Fahrzeug ausgeführt ist.

Zu erwähnen ist darüber hinaus, dass die Schwenkachse vorzugsweise in einer im Wesentlichen vertikalen Ebene ausgerichtet ist, die z. B. im Wesentlichen parallel zur Fahrzeuglängsrichtung verlaufen kann.

Die Windschutzscheibe ist vorzugsweise eine Front-Windschutzscheibe.

Der Neigungswinkel α in der Parkposition zeigt sich insbesondere bei einer Seitenansicht, während sich der Neigungswinkel α in der Außenposition insbesondere in einer Seitenansicht und/oder einer Draufsicht zeigt.

Die Erfindung ist nicht auf einen Scheibenwischer beschränkt, sondern umfasst auch eine Windschutzscheibe für ein Fahrzeug, vorzugsweise ein Nutzfahrzeug, insbesondere einen Lastkraftwagen oder einen Omnibus, mit zumindest einem Scheibenwischer wie hierin offenbart. Die Windschutzscheibe umfasst zweckmäßig einen Mittelbereich und zwei seitliche Außenbereiche mit zweckmäßig stärkerer Krümmung als im Mittelbereich.

Es ist möglich, dass die Außenwischposition des Scheibenwischers und/oder der nicht vom Scheibenwischer erreichbare Seitenabschnitt des Außenbereichs der Windschutzscheibe um weniger als 12cm, 10cm, 8cm, 6cm, 4cm oder 2cm von der zugehörigen A-Säule des Fahrzeugs beabstandet ist.

Der Normalenfehlerwinkel der Wischebene und/oder des Wischelements relativ zur Windschutzscheibe kann in der Außenwischposition vorzugsweise kleiner oder gleich 20°, 18°, 15°, 12°, 9°, 6° oder 3° betragen.

Ebenfalls umfasst die Erfindung ein Fahrzeug mit einer Windschutzscheibe und/oder einem Scheibenwischer wie hierin offenbart, z. B. ein Nutzfahrzeug, vorzugweise einen Omnibus oder Lastkraftwagen.

Die zuvor beschriebenen bevorzugten Ausführungsformen und Merkmale der Erfindung sind miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1A: zeigt eine Vorderansicht einer Windschutzscheibe und eines Scheibenwischers gemäß Stand der Technik in einer Parkposition,
- Figur 1B: zeigt eine Seitenansicht der Windschutzscheibe und des Scheibenwischers der Figur 1A in der Parkposition,
- Figur 1C: zeigt eine Draufsicht der Windschutzscheibe und den Scheibenwischer der Figuren 1A und 1B in der Parkposition,
- Figur 2A: zeigt eine Vorderansicht der Windschutzscheibe und des Scheibenwischers der Figuren 1A bis 1C in einer Außenwischposition,
- Figur 2B: zeigt eine Seitenansicht der Windschutzscheibe und des Scheibenwischers der Figur 2A in der Außenwischposition,
- Figur 2C: zeigt eine Draufsicht der Windschutzscheibe und den Scheibenwischer der Figuren 2A und 2B in der Außenwischposition,

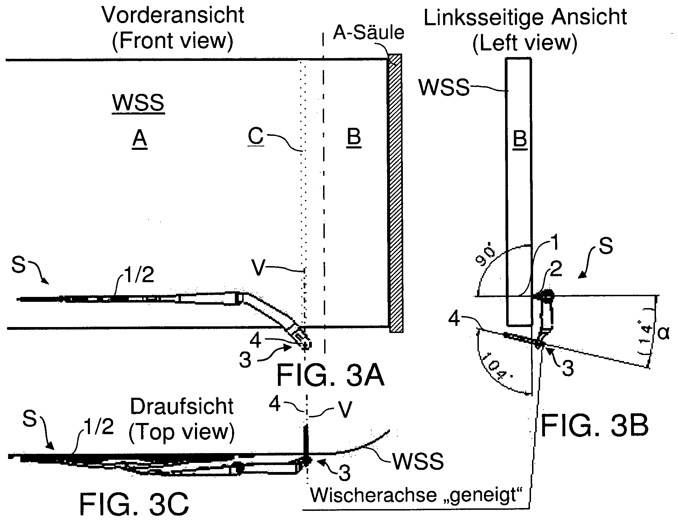

- Figur 3A: zeigt eine Vorderansicht einer Windschutzscheibe und eines Scheibenwischers gemäß einer Ausführungsform der Erfindung in einer Parkposition,
- Figur 3B: zeigt eine Seitenansicht der Windschutzscheibe und des Scheibenwischers der Figur 3A in der Parkposition,
- Figur 3C: zeigt eine Draufsicht der Windschutzscheibe und des Scheibenwischers der Figuren 3A und 3B in der Parkposition,

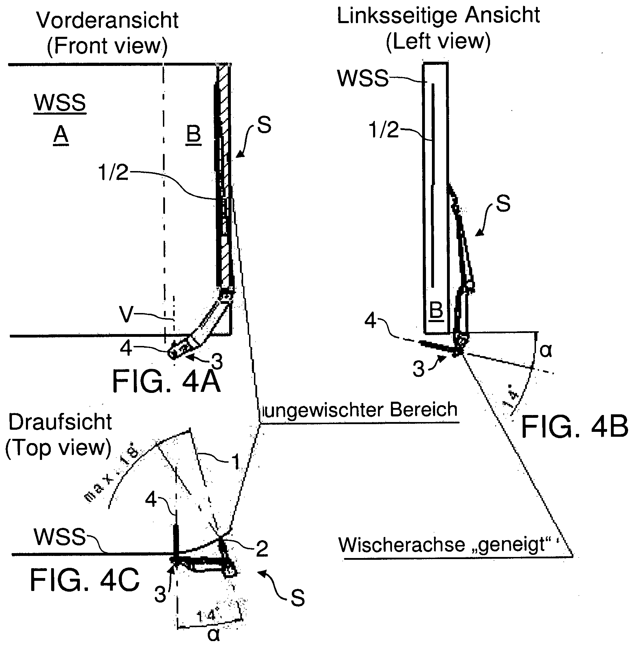

- Figur 4A: zeigt eine Vorderansicht der Windschutzscheibe und des Scheibenwischers der Figuren 3A bis 3C in einer Außenwischposition,
- Figur 4B: zeigt eine Seitenansicht der Windschutzscheibe und des Scheibenwischers der Figur 4A in der Außenwischposition,
- Figur 4C: zeigt eine Draufsicht der Windschutzscheibe und des Scheibenwischers der Figuren 4A und 4B in der Außenwischposition,

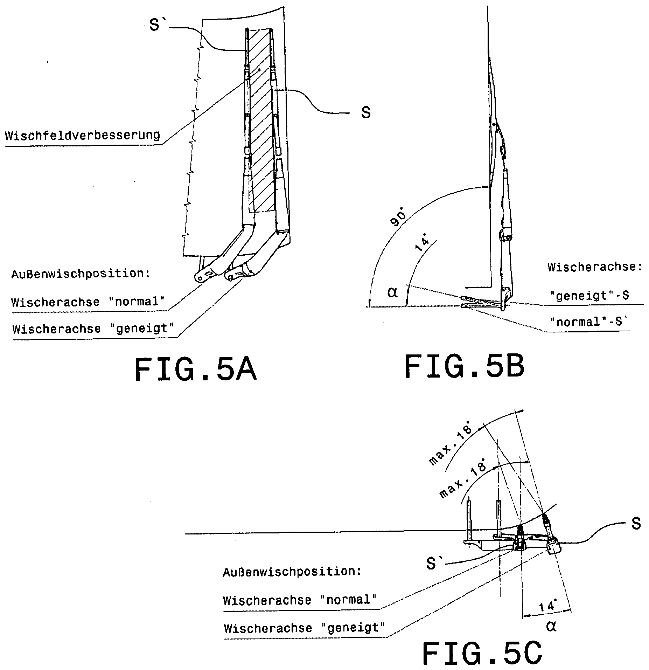

- Figur 5A: zeigt eine Draufsicht auf eine Windschutzscheibe und einen Scheibenwischer gemäß Stand der Technik und einen Scheibenwischer gemäß einer Ausführungsform der Erfindung in einer Außenwischposition,
- Figur 5B: zeigt eine Seitenansicht auf die Windschutzscheibe und die Scheibenwischer der Figur 5A und
- Figur 5C: zeigt eine Draufsicht der Windschutzscheibe und der Scheibenwischer der Figuren 5A und 5B.

Figur 3A zeigt eine Vorderansicht einer Windschutzscheibe WSS und eines Scheibenwischers S gemäß einer Ausführungsform der Erfindung in einer Parkposition. Die Figur 3B zeigt eine zugehörige Seitenansicht, insbesondere eine linksseitige Ansicht, während die Figur 3C eine zugehörige Draufsicht zeigt.

Unter Bezugnahme auf die Figuren 3A, 3B und 3C umfasst die Windschutzscheibe WSS einen Mittelbereich A und zwei seitliche Außenbereiche B mit stärkerer Krümmung als im Mittelbereich A, wobei nur ein seitlicher Außenbereich B dargestellt ist. Die Außenbereiche B schließen wie üblich an eine nur in Figur 3A schematisch dargestellte Fahrzeug-A-Säule an.

Der Scheibenwischer S umfasst ein in einer Wischebene 1 wirk- und/oder ausrichtbares Wischelement 2, z. B. ein Wischblatt, zum Wischen der Windschutzscheibe WSS und eine Lagerstelle 3, die eine Schwenkachse 4 aufweist, um die der Scheibenwischer S von der Parkposition in die Außenwischposition und wieder zurück hin und her schwenkbar ist.

Das Wischelement 2 ist im Betriebszustand in einer Wischebene 1 relativ zur Windschutzscheibe WSS ausrichtbar und kann folglich alternativ oder ergänzend in selbiger auf die Windschutzscheibe WSS wirken.

Die Lagerstelle 3 kann z. B. einen Schwenk- oder Lagerbolzen umfassen, der zur Montage an das Fahrzeug dient, und/oder ein Montagemittel zur Montag an den Schwenk- oder Lagerbolzen.

Die Schwenkachse 4 dient zur ortsfesten Positionierung relativ zum Fahrzeug und erstreckt sich in einer im Wesentlichen vertikalen Ebene V, die vorzugsweise im Wesentlichen parallel zur Fahrzeuglängsrichtung verläuft.

Die Schwenkachse 4 und die Wischebene 1 sind unter einem Neigungswinkel α geneigt zueinander ausgerichtet, so dass die Schenkachse 4 und die Wischebene 1 sich unter dem Neigungswinkel α schneiden, was in der Parkposition insbesondere in der Seitenansicht der Figur 3B gesehen werden kann.

Der Neigungswinkel α zwischen der Wischebene 1 und der Schwenkachse 4 wird zweckmäßig durch die Geometrie der Windschutzscheibe WSS definiert. Der Neigungswinkel α beträgt in der vorliegenden Ausführungsform 14°.

In der Parkposition des Scheibenwischers S ist die Wischebene 1 im Wesentlichen senkrecht und somit im Wesentlichen normal zur Windschutzscheibe WSS ausgerichtet.

Die Schwenkachse 4 ist relativ zur Windschutzscheibe WSS darüber, also im in Figur 3A gekennzeichneten Windschutzscheibenbereich C, nicht senkrecht und somit nicht normal ausgerichtet ist, sondern um den Neigungswinkel α beaufschlagt geneigt. Der Windschutzscheibenbereich C kann insbesondere durch die Ebene V definiert werden bzw. selbige umfassen. Die Ebene V erstreckt sich wie zuvor erwähnt im Wesentlichen vertikal, vorzugsweise im Wesentlichen parallel zur Fahrzeuglängsrichtung und umfasst zweckmäßig die Schwenkachse 4.

Das Wischelement 2 und die Wischebene 1 sind in der Parkposition wie üblich im Wesentlichen horizontal ausgerichtet.

Figur 4A zeigt eine Vorderansicht der Windschutzscheibe WSS und des Scheibenwischers S der Figuren 3A bis 3C in einer den Außenbereich B umfassenden Außenwischposition, insbesondere einer äußersten Außenwischposition des Scheibenwischers S. Figur 4B zeigt eine zugehörige Seitenansicht, insbesondere eine linksseitige Ansicht, während Figur 4C eine zugehörige Draufsicht zeigt.

Das Wischelement 2 und die Wischebene 1 sind in der Außenwischposition im Wesentlichen vertikal ausgerichtet ist.

Insbesondere der Seitenansicht der Figur 4B und der Draufsicht der Figur 4C kann entnommen werden, dass die Schwenkachse 4 und die Wischebene 1 nicht nur in der Parkposition unter dem Neigungswinkel α zueinander ausgerichtet sind, sondern auch in der Außenwischposition unter dem Neigungswinkel α geneigt zueinander ausgerichtet sind und sich somit zweckmäßig unter dem Neigungswinkel α schneiden.

Figur 4C zeigt, dass die Wischebene 1 bzw. das Wischelement 2 in der Außenwischposition unter einem mittels dem Neigungswinkel α reduzierten Normalenfehlerwinkel relativ zur Windschutzscheibe WSS ausgerichtet ist bzw. wirkt.

Die Wirkung des Neigungswinkels α auf die Wischebene 1 bzw. die Windschutzscheibe WSS kommt erst hin zur Außenwischposition, insbesondere erst in der Außenwischposition des Scheibenwischers S zum Tragen. Das dadurch bedingt, weil in der Parkposition trotz des Neigungswinkels α die Wischebene 1 bzw. das Wischelement 2 vorzugsweise im Wesentlichen normal zur Windschutzscheibe WSS ausgerichtet ist, hingegen in der Außenwischposition der Neigungswinkel α zu einer Reduzierung des Normalenfehlerwinkels führt.
Der in Figur 4A zu sehende ungewischte Seitenabschnitt des Außenbereichs B ist vorzugsweise um weniger als 6cm von der Fahrzeug-A-Säule beabstandet. Figur 5A zeigt eine Vorderansicht einer Windschutzscheibe mit einem Scheibenwischer S' gemäß Stand der Technik und einem Scheibenwischer S gemäß einer Ausführungsform der Erfindung in einer Außenwischposition, während Figur 5B eine zugehörige Seitenansicht und Figur 5C eine zugehörige Draufsicht zeigt.
Aus den Figuren 5A bis 5C wird ersichtlich, dass mittels des erfindungsgemäßen Scheibenwischers S der Normalenfehlerwinkel eines Wischelements relativ zur Windschutzscheibe reduziert und somit das Wischergebnis verbessert werden kann und zudem eine Wischfeldverbesserung erzielbar ist, insbesondere eine Wischfeldvergrößerung hin zum seitlichen Außenbereich der Windschutzscheibe bzw. den Fahrzeug-A-Säulen.

### Bezugszeichenliste

- 1: Wischebene, z. B. Wischwirk- und/oder Wischelementausrichtebene
- 2: Wischelement, z. B. Wischblatt oder Wischlippe
- 3: Lagerstelle
- 4: Schwenkachse, z. B. Lager- oder Wischerachse
- S: Scheibenwischer
- WSS: Windschutzscheibe
- A: Mittelbereich der Windschutzscheibe
- B: Seitlicher Außenbereich der Windschutzscheibe, vorzugsweise äußerster seitlicher Außenbereich der Windschutzscheibe
- C: Windschutzscheibenbereich über Schwenkachse
- V: Im Wesentlichen vertikale, die Schwenkachse umfassende Ebene, vorzugsweise im Wesentlichen parallel zur Fahrzeuglängsrichtung

## Patentansprüche

1. Scheibenwischer (S) für eine gewölbte Windschutzscheibe (WSS) für ein Fahrzeug mit einem Mittelbereich (A) und zwei Außenbereichen (B) mit insbesondere stärkerer Krümmung als im Mittelbereich (A), mit: einem in einer Wischebene (1) wirk- oder ausrichtbaren Wischelement (2) zum Wischen der Windschutzscheibe (WSS) und einer Lagerstelle (3), die eine Schwenkachse (4) aufweist, um die der Scheibenwischer (S) von einer Parkposition in eine Außenwischposition schwenkbar ist, wobei die Schwenkachse (4) und die Wischebene (1) unter einem Neigungswinkel (α) geneigt zueinander ausgerichtet sind, wobei die Wischebene (1) und/oder das Wischelement (2) in der Außenwischposition unter einem mittels dem Neigungswinkel (α) reduzierten Normalenfehlerwinkel relativ zur Windschutzscheibe (WSS) ausrichtbar ist, **dadurch gekennzeichnet, dass** die Schwenkachse (4) und die Wischebene (1) in der Parkposition unter dem Neigungswinkel (α) geneigt zueinander ausgerichtet sind.

2. Scheibenwischer (S) nach Anspruch 1, **dadurch gekennzeichnet, dass** die Wischebene (1) in der Parkposition im Wesentlichen senkrecht zur Windschutzscheibe (WSS) ausgerichtet ist.

3. Scheibenwischer (S) nach Anspruch 1 oder 2, **dadurch gekennzeichnet, dass** die Schwenkachse (4) relativ zur Windschutzscheibe (WSS) darüber (C) nicht senkrecht ausgerichtet ist, sondern um den Neigungswinkel (α) beaufschlagt geneigt.

4. Scheibenwischer (S) nach einem der vorhergehenden Ansprüche, **dadurch gekennzeichnet, dass** das Wischelement (2) in der Parkposition sich im Wesentlichen horizontal erstreckt.

5. Scheibenwischer (S) nach einem der vorhergehenden Ansprüche, **dadurch gekennzeichnet, dass** die Schwenkachse (4) und die Wischebene (1) in der Parkposition und der Außenwischposition unter dem Neigungswinkel (α) geneigt zueinander ausgerichtet sind und sich somit unter dem Neigungswinkel (α) schneiden.

6. Scheibenwischer (S) nach einem der vorhergehenden Ansprüche, **dadurch gekennzeichnet, dass** das Wischelement (2) in der Außenwischposition sich im Wesentlichen vertikal erstreckt.

7. Scheibenwischer (S) nach einem der vorhergehenden Ansprüche, **dadurch gekennzeichnet, dass** die Wirkung des Neigungswinkels (α) auf die Ausrichtung der Wischebene (1) und/oder des Wischelements (2) relativ zur Windschutzscheibe (WSS) erst hin zur Außenwischposition des Scheibenwischers (S) zum Tragen kommt und/oder der Neigungswinkel (α) der Schwenkachse (4) sich in der Außenwischposition in der Ausrichtung der Wischebene (1) widerspiegelt.

8. Scheibenwischer (S) nach einem der vorhergehenden Ansprüche, **dadurch gekennzeichnet, dass** die Schwenkachse (4) in einer im Wesentlichen vertikalen, sich im Wesentlichen parallel zur Fahrzeuglängsrichtung erstreckenden Ebene (V) ausgerichtet ist.

9. Scheibenwischer (S) nach einem der vorhergehenden Ansprüche, **dadurch gekennzeichnet, dass** der Neigungswinkel (α) zwischen inklusive 5° und inklusive 25° oder zwischen inklusive 10° und inklusive 20° beträgt, vorzugsweise 14° +/- 4° beträgt, insbesondere in der Parkposition und/oder der Außenwischposition.

10. Scheibenwischer (S) nach einem der vorhergehenden Ansprüche, **dadurch gekennzeichnet, dass** die Außenwischposition die äußerste Außenwischposition des Scheibenwischers (S) darstellt.

11. Windschutzscheibe (WSS) für ein Fahrzeug, vorzugsweise ein Nutzfahrzeug, die einen Mittelbereich (A) und zwei Außenbereiche (B) mit insbesondere stärkerer Krümmung als im Mittelbereich (A) aufweist, mit zumindest einem Scheibenwischer (S) nach einem der vorhergehenden Ansprüche.

12. Windschutzscheibe (WSS) nach Anspruch 11, **dadurch gekennzeichnet, dass** die Außenwischposition des Scheibenwischers (S) und/oder der nicht vom Scheibenwischer (S) erreichbare Seitenabschnitt des Außenbereichs (B) um weniger als 12cm, 10cm, 8cm, 6cm, 4cm oder 2cm von einer A-Säule des Fahrzeugs beabstandet ist.

13. Windschutzscheibe (WSS) nach Anspruch 11 oder 12, **dadurch gekennzeichnet, dass** der Normalenfehlerwinkel der Wischebene (1) und/oder des Wischelements (2) relativ zur Windschutzscheibe (WSS) in der Außenwischposition kleiner oder gleich 20°, 18°, 15°, 12°, 9° oder 6° ist.

14. Fahrzeug, vorzugsweise Nutzfahrzeug, mit einer Windschutzscheibe (WSS) nach einem der Ansprüche 11 bis 13.

## Claims

1. Windscreen wiper (S) for a curved windscreen (WSS) for a vehicle having a central region (A) and two outer regions (B) having an in particular more pronounced curvature than the central region (A), with: a wiping element (2) which can be operated or oriented in a wiping plane (1) for wiping the windscreen (WSS), and a bearing point (3) which has a pivot axis (4) about which the windscreen wiper (S) can be pivoted from a parking position into an outer wiping position, wherein the pivot axis (4) and the wiping plane (1) are oriented inclined with respect to each other at an angle of inclination (α), wherein, in the outer wiping position, the wiping plane (1) and/or the wiping element (2) can be oriented at a normal error angle, which is reduced by means of the angle of inclination (α), relative to the windscreen (WSS), **characterized in that**, in the parking position, the pivot axis (4) and the wiping plane (1) are oriented inclined with respect to each other at the angle of inclination (α).

2. Windscreen wiper (S) according to Claim 1, **characterized in that**, in the parking position, the wiping plane (1) is oriented substantially perpendicularly to the windscreen (WSS).

3. Windscreen wiper (S) according to Claim 1 or 2, **characterized in that** the pivot axis (4) is not oriented relative to the windscreen (WSS) perpendicularly thereabove (C), but rather is inclined applied by the angle of inclination (α).

4. Windscreen wiper (S) according to one of the preceding claims, **characterized in that**, in the parking position, the wiping element (2) extends substantially horizontally.

5. Windscreen wiper (S) according to one of the preceding claims, **characterized in that**, in the parking position and in the outer wiping position, the pivot axis (4) and the wiping plane (1) are oriented inclined with respect to each other by the angle of inclination (α) and therefore intersect at the angle of inclination (α).

6. Windscreen wiper (S) according to one of the preceding claims, **characterized in that**, in the outer wiping position, the wiping element (2) extends substantially vertically.

7. Windscreen wiper (S) according to one of the preceding claims, **characterized in that** the action of the angle of inclination (α) on the orientation of the wiping plane (1) and/or of the wiping element (2) relative to the windscreen (WSS) only comes into effect towards the outer wiping position of the windscreen wiper (S), and/or the angle of inclination (α) of the pivot axis (4) is reflected in the orientation of the wiping plane (1) in the outer wiping position.

8. Windscreen wiper (S) according to one of the preceding claims, **characterized in that** the pivot axis (4) is oriented in a substantially vertical plane (V) extending substantially parallel to the longitudinal direction of the vehicle.

9. Windscreen wiper (S) according to one of the preceding claims, **characterized in that** the angle of inclination (α) is between 5° inclusive and 25° inclusive or between 10° inclusive and 20° inclusive, and is preferably 14° +/- 4°, in particular in the parking position and/or the outer wiping position.

10. Windscreen wiper (S) according to one of the preceding claims, **characterized in that** the outer wiping position is the outermost outer wiping position of the windscreen wiper (S).

11. Windscreen (WSS) for a vehicle, preferably a commercial vehicle, which has a central region (A) and two outer regions (B) having an in particular more pronounced curvature than in the central region (A), with at least one windscreen wiper (S) according to one of the preceding claims.

12. Windscreen (WSS) according to Claim 11, **characterized in that** the outer wiping position of the windscreen wiper (S) and/or that side portion of the outer region (B) which cannot be reached by the windscreen wiper (S) is spaced apart from an A pillar of the vehicle by less than 12 cm, 10 cm, 8 cm, 6 cm, 4 cm or 2 cm.

13. Windscreen (WSS) according to Claim 11 or 12, **characterized in that** the normal error angle of the wiping plane (1) and/or of the wiping element (2) relative to the windscreen (WSS) is smaller than or equal to 20°, 18°, 15°, 12°, 9° or 6° in the outer wiping position.

14. Vehicle, preferably commercial vehicle, with a windscreen (WSS) according to one of Claims 11 to 13.

## Revendications

1. Essuie-glace (S) destiné à un pare-brise incurvé (WSS) pour un véhicule avec une zone centrale (A) et deux zones extérieures (B) dotées en particulier d'une courbure plus forte que dans la zone centrale (A), avec: un élément d'essuie-glace (2) activable et orientable dans un plan de balayage (1) pour le balayage du pare-brise (WSS) et un point d'appui (3), qui présente un axe de pivotement (4), autour duquel l'essuie-glace (S) peut pivoter d'une position de parcage à une position de balayage extérieure, dans lequel l'axe de pivotement (4) et le plan de balayage (1) sont orientés de façon inclinée l'un par rapport à l'autre avec un angle d'inclinaison (α), dans lequel le plan de balayage (1) et/ou l'élément d'essuie-glace (2) dans la position de balayage extérieure peut être orienté par rapport au pare-brise (WSS) sous un angle d'erreur de normale réduit au moyen de l'angle d'inclinaison (α), **caractérisé en ce que** l'axe de pivotement (4) et le plan de balayage (1) dans la position de parcage sont orientés de façon inclinée l'un par rapport à l'autre sous l'angle d'inclinaison (α).

2. Essuie-glace (S) selon la revendication 1, **caractérisé en ce que** le plan de balayage (1) dans la position de parcage est essentiellement perpendiculaire au pare-brise (WSS).

3. Essuie-glace (S) selon la revendication 1 ou 2, **caractérisé en ce que** l'axe de pivotement (4) n'est pas orienté perpendiculairement au pare-brise (WSS) au-delà de (C), mais il est incliné en présentant l'angle d'inclinaison (α).

4. Essuie-glace (S) selon l'une quelconque des revendications précédentes, **caractérisé en ce que** l'élément d'essuie-glace (2) dans la position de parcage s'étend essentiellement horizontalement.

5. Essuie-glace (S) selon l'une quelconque des revendications précédentes, **caractérisé en ce que** l'axe de pivotement (4) et le plan de balayage (1) dans la position de parcage et dans la position de balayage extérieure sont orientés de façon inclinée l'un par rapport à l'autre sous l'angle d'inclinaison (α) et se coupent de ce fait sous l'angle d'inclinaison (α).

6. Essuie-glace (S) selon l'une quelconque des revendications précédentes, **caractérisé en ce que** l'élément d'essuie-glace (2) dans la position de balayage extérieure s'étend essentiellement verticalement.

7. Essuie-glace (S) selon l'une quelconque des revendications précédentes, **caractérisé en ce que** l'effet de l'angle d'inclinaison (α) sur l'orientation du plan de balayage (1) et/ou de l'élément d'essuie-glace (2) par rapport au pare-brise (WSS) ne se manifeste qu'en direction de la position de balayage extérieure de l'essuie-glace (S) et/ou l'angle d'inclinaison (α) de l'axe de pivotement (4) se répercute dans la position de balayage extérieure dans l'orientation du plan de balayage (1).

8. Essuie-glace (S) selon l'une quelconque des revendications précédentes, **caractérisé en ce que** l'axe de pivotement (4) est orienté dans un plan essentiellement vertical (V) qui s'étend essentiellement parallèlement à la direction longitudinale du véhicule.

9. Essuie-glace (S) selon l'une quelconque des revendications précédentes, **caractérisé en ce que** l'angle d'inclinaison (α) vaut de 5° inclus à 25° inclus ou entre 10° inclus et 20° inclus, vaut de préférence 14° ± 4°, en particulier dans la position de parcage et/ou dans la position de balayage extérieure.

10. Essuie-glace (S) selon l'une quelconque des revendications précédentes, **caractérisé en ce que** la position de balayage extérieure représente la position de balayage extérieure la plus extérieure de l'essuie-glace (S).

11. Pare-brise (WSS) pour un véhicule, de préférence un véhicule utilitaire, qui présente une zone centrale (A) et deux zones extérieures (B) avec en particulier une courbure plus forte que dans la zone centrale (A), doté d'au moins un essuie-glace (S) selon l'une quelconque des revendications précédentes.

12. Pare-brise (WSS) selon la revendication 11, **caractérisé en ce que** la position de balayage extérieure de l'essuie-glace (S) et/ou la partie latérale de la zone extérieure (B) qui ne peut pas être atteinte par l'essuie-glace (S) est distante de moins de 12 cm, 10 cm, 8 cm, 6 cm, 4 cm ou 2 cm d'un montant A du véhicule.

13. Pare-brise (WSS) selon la revendication 11 ou 12, **caractérisé en ce que** l'angle d'erreur de normale du plan de balayage (1) et/ou de l'élément d'essuie-glace (2) par rapport au pare-brise (WSS) est dans la position de balayage extérieure inférieur ou égal à 20°, 18°, 15°, 12°, 9° ou 6°.

14. Véhicule, de préférence véhicule utilitaire, doté d'un pare-brise (WSS) selon l'une quelconque des revendications 11 à 13.
